# EUROPÄISCHE PATENTSCHRIFT

(11) **EP 2 067 676 B1**
(45) Veröffentlichungstag und Bekanntmachung des Hinweises auf die Patenterteilung: **27.01.2010**
(21) Anmeldenummer: 08018516.8
(22) Anmeldetag: 23.10.2008
(51) Int. Cl.: B60T 17/22

(54) **Bremsprobeanlage zur Prüfung von Druckluftbremsen bei Schienenfahrzeugen**
Assembly for testing rail vehicle air brakes
Installation pour tester des freins à air comprimé de véhicules ferroviaires

(30) Priorität: 03.12.2007 DE 102007058386
(43) Veröffentlichungstag der Anmeldung: 10.06.2009
(73) Patentinhaber: FEW Blankenburg GmbH, 38889 Blankenburg (DE)
(72) Erfinder: Becker, Dietmar, 38889 Blankenburg (DE); Becker, Frank, 38871 Darlingerode (DE); Weissenborn, Uwe, 38889 Stiege (DE)
(74) Vertreter: Zinken-Sommer, Rainer

(56) Entgegenhaltungen:
- EP-A- 0 738 641
- DE-A1-102004 023 505
- DE-U1-202006 015 627

## Beschreibung

Die Erfindung betrifft eine Bremsprobeanlage zur Prüfung von Druckluftbremsen bei Schienenfahrzeugen, die an ein Druckluft-Versorgungsnetz zur Beaufschlagung der zu prüfenden Bremsen mit Druckluft angeschlossen ist.

Derartige bekannte Bremsprobeanlagen finden sich auf Gleisanlagen, insbesondere in Rangierbahnhöfen, auf denen Einzelwagen bzw. Wagengruppen zu neuen Zügen mit jeweils verschiedenen Zielbahnhöfen zusammengestellt werden. Nach dem Beidrücken und Kuppeln der Einzelwagen bzw. Wagengruppen muss der ordnungsgemäße Zustand der Bremsanlage eines solchermaßen gebildeten Zuges überprüft werden. Hierbei ist es von besonderer Bedeutung, dass die Hauptluftleitung des Zuges dicht und über alle Fahrzeug-Kupplungen hinweg durchgehend ausgeführt ist (d.h. beispielsweise an keiner Stelle innerhalb des Zugverbandes ein geschlossenes Absperr-Ventil die Hauptluftleitung unterbricht).
Die Überprüfung erfolgt dadurch, dass das den Zugverband führende Triebfahrzeug eine Lade-Luftstoß auf die Hauptluftleitung beaufschlagt, wobei jede einzelne Bremsanlage eines Einzelfahrzeuges (z.B. eines Waggons) bei einer eingangsseitigen Beaufschlagung mit dem Ladeluft-Stoß gelöst wird. Durch eine definierte Abfolge von verschiedenen Operationen kann somit überprüft werden, ob die einzelnen Fahrzeuge des Zugverbandes über funktionierende Bremsen verfügen und der gesamte Zugverband die betrieblich erforderliche Bremsleistung aufbringen kann. Nur bei Vorliegen einer erfolgreich bestandenen Bremsprobe darf der Zugverband die Erlaubnis zur Abfahrt erhalten.
Aus der EP 738 641 B1 ist es bekannt, die Druckluftenergie der Hauptbremsleitung mittels eines durch einen Druckluftmotor angetriebenen Stromgenerator zur Energieversorgung einer elektrischen Überwachungseinrichtung an einem Schienenfahrzeug zu nutzen. In Anlehnung hieran schlägt die DE 20 2006 015 627 U1 eine Drucküberwachungseinrichtung für eine Hauptluftleitung eines Zuges vor, welche über mindestens ein den aktuellen Druck in der Hauptluftleitung erfassendes Satellitengerät sowie über ein Basisgerät zur Anzeige des durch das Satellitengerät erfassten Druckwertes verfügt, wobei jedes Satellitengerät an beliebigen Kupplungseinrichtungen - bevorzugt am letzten freien Kupplungsende - des Zuges sowie das Basisgerät im führenden Fahrzeug des Zuges angeordnet sind. Hierbei ist vorgesehen, dass die Energieversorgung des Satellitengerätes über eine aus der Hauptluftleitung mit Druckluft versorgte Turbinen-Generator-Einheit erfolgt.

Zur Verkürzung der betrieblichen Prozess-Ablaufzeiten bei der Neubildung von Zügen ist man in vielen Zugbildungsanlagen dazu übergegangen, die Bremsproben unter Verwendung stationärer Bremsprobeanlagen an gekuppelten Zugverbänden durchzuführen. Auf diese Weise kann man den Zugverband unabhängig von einem angekuppelten Triebfahrzeug - und damit noch vor der Bereitstellung eines Triebfahrzeuges - bremstechnisch behandeln und Wartezeiten bis zur Bereitstellung eines Triebfahrzeuges produktiv nutzen. Zusätzlich verringern sich dadurch die Stillstandszeiten für die Triebfahrzeuge.
Derartige moderne stationäre Bremsprobeanlagen verfügen üblicherweise über speicherprogrammierbare Steuereinheiten (SPS) und sind oftmals funkfernsteuerbar ausgeführt. Deshalb benötigen diese Anlagen eine elektrische 230V-Anschlußleitung.
Insbesondere bei der Umrüstung älterer mechanischer Bremsprobeanlagen ist dies jedoch ein Faktor für hohe Sprungkosten, da in Anbetracht der im Gleisfeld räumlich weit verteilten Anlagenstandorte Kabelverlegungen in beträchtlichem Umfang notwendig sind. Durch die Notwendigkeit von 230V-Anschlußleitungen wird das bei der Modernisierung von stationären Bremsprobeanlagen erzielbare Einsparungspotential gemindert.

Der Erfindung liegt die Aufgabe zugrunde, eine Bremsprobeanlage zur Prüfung von Druckluftbremsen bei Schienenfahrzeugen, die an ein Druckluft-Versorgungsnetz zur Beaufschlagung der zu prüfenden Bremsen mit Druckluft angeschlossen ist, bereitzustellen, welche den Betrieb elektrischer Verbraucher unabhängig von der Existenz einer 230V-Anschlußleitung ermöglicht.

Diese Aufgabe wird in Verbindung mit dem Oberbegriff des Patentanspruches 1 erfindungsgemäß dadurch gelöst, dass die Bremsprobeanlage einen vom Luftstrom des Druckluft-Versorgungsnetzes angetriebenen drehzahlungeregelten Generatorsatz, bestehend aus einer Turbine oder einem Motor sowie einem Gleichstromgenerator, sowie einen Kondensator-Zwischenspeicher umfasst, wobei der Generatorsatz unter Zwischenschaltung einer den Motor oder die Turbine in Abhängigkeit vom Ladezustand des Kondensator-Zwischenspeichers zu- oder abschaltenden sowie den Gleichstromgenerator mit einer konstanten Last beaufschlagenden Steuerungsvorrichtung zur Erzeugung eines intermittierenden Ladestroms für den Kondensator-Zwischenspeicher sowie der Kondensator-Zwischenspeicher zur Abgabe eines Entladestroms an der Bremsprobeanlage zugeordnete elektrische Verbraucher eingerichtet sind.

Die Druckluftturbine bzw. der alternativ zur Turbine ebenso geeignete Druckluftmotor wird ohne Drehzahlregler direkt mit dem vollen Betriebsdruck der Druckluftleitung beaufschlagt. Über die Druckluftturbine bzw. den Druckluftmotor steht immer das maximal nutzbare Druckgefälle an. Auf diese Weise treiben Druckluftturbine bzw. -motor einen permanent erregten Gleichstromgenerator an, welcher über eine Ladeelektronik einen Kondensator als Zwischenspeicher lädt. Dabei wird zum einen die Druckluftturbine bzw. der Druckluftmotor in Abhängigkeit vom Ladezustand des Kondensators jeweils zu- oder abgeschaltet, zum anderen belastet die Ladeelektronik den Gleichstromgenerator mit einer konstanten Last.

Der Kern der Erfindung liegt darin, dass diese auf den Gleichstromgenerator aufgebrachte Last derart bemessen ist, dass der Druckluftturbine bzw. dem Druckluftmotor eine Leistung abverlangt wird, bei der die Energieumwandlung jeweils mit dem besten Wirkungsgrad erfolgt.

Es ist für den Fachmann ersichtlich, dass es für den Erfindungsgedanken von nachrangiger Bedeutung ist, ob der Generator mittels einer Strömungsmaschine (Turbine) oder einer Verdrängungsmaschine (Motor) angetrieben wird. Druckluftturbine und Druckluftmotor unterscheiden sich zueinander lediglich durch unterschiedliche Auslegungspunkte, bei denen die Energieumwandlung mit dem jeweils besten Wirkungsgrad erfolgt. Im Falle einer Druckluftturbine ist der Auslegungspunkt (mit dem bestmöglichen Wirkungsgrad) unter Volllast erreicht. Demgegenüber gibt es bei einem Druckluftmotor einen Auslegungspunkt, bei dem der spezifische Luftverbrauch minimal und damit der Wirkungsgrad des Motors maximal ist. Die Leistung des Druckluftmotors ist in diesem Auslegungspunkt kleiner als die mögliche Maximalleistung. Im Hinblick auf den erfinderischen Kerngedanken unterscheidet sich damit auch die von der Ladeelektronik auf den Gleichspannungsgenerator aufzubringende Last.

Die elektrischen Verbraucher in einem automatischen Bremsprobegerät können üblicherweise problemlos mit einer Gleichspannung von 24 V betrieben werden. Die variable Spannung am Kondensator wird deshalb mittels eines DC-DC-Wandlers in eine konstante Gleichspannung von 24 V umgewandelt.

Ein alternativer und - zumindest anscheinend - einfacherer Ansatz zur Lösung der gestellten Aufgabe bestünde darin, einen Gleichspannungsgenerator mit einem Spannungsniveau von 24 V durch eine Druckluftturbine oder einen Druckluftmotor anzutreiben und die Ausgangsspannung am Gleichspannungsgenerator unmittelbar der Versorgung der elektrischen Verbraucher zuzuführen. Die Druckluftturbine bzw. der Druckluftmotor wären mit einer Drehzahlregelung (z.B. elektronisch oder mechanischer Fliehkraftregler) versehen. Der Gleichspannungsgenerator wäre sodann mit einer Spannungsregelung zur Kompensation der Belastungsabhängigkeit der Ausgangsspannung ausgestattet, wobei diese Spannungsregelung üblicherweise auf den Erregerstrom Einfluss nehmen würde. Die Leistungsauslegung des aus Druckluftturbine bzw. -motor und Gleichspannungsgenerator bestehenden Generatorsatzes müsste mindestens die maximale Leistungsanforderung des Bremsprobegerätes abdecken; im Teillastbetrieb wäre eine starke Drosselung erforderlich.

Dies ist jedoch ein signifikanter Nachteil, da der Leistungsbedarf der elektrischen Verbraucher einer Bremsprobeanlage nicht nur starken Schwankungen unterliegt, sondern die elektrischen Verbraucher sich auch zu circa der Hälfte der gesamten Betriebszeit der Bremsprobeanlage in einem bedarfsschwachen Stand-By-Betriebsmodus befinden, dessen Leistungsbedarf lediglich circa ein Drittel des Leistungsbedarfs im vollen Betriebsmodus ausmacht.

Das erfinderische Konzept hat gegenüber diesem ebenfalls denkbaren Ansatz jedoch erhebliche Vorteile, da es - unabhängig vom aktuellen Betriebszustand der Bremsprobeanlage - einen ungedrosselten konstanten Betrieb des Druckluftmotors bzw. der Druckluftturbine im jeweils Wirkungsgrad-optimalen Arbeitspunkt ermöglicht. Das erfinderische Konzept vermeidet auch in den bedarfsschwachen Betriebszuständen der Bremsprobeanlage die ansonsten zur Drehzahlregulierung der Druckluftturbine bzw. des Druckluftmotors notwendige Drosselung des zugeführten Druckluftstromes, welche das Arbeitsvermögen der (teuer erzeugten) Druckluft entwerten und eine Wirkungsgrad-Verschlechterung der Druckluftturbine bzw. des Druckluftmotors bewirken würde.

Zusätzlich weist das erfinderische Konzept den Vorteil auf, dass die Leistungsauslegung des Generatorsatzes nicht für die maximale elektrische Leistung der angeschlossenen Verbraucher zu erfolgen hat; sie muss stattdessen nur mindestens (= gleich oder größer) derer mittlerer elektrischer Leistung entsprechen. Leistungsspitzen werden hingegen aus dem Kondensator gedeckt.

Eine sinnvolle Ausgestaltung der Erfindung sieht zusätzlich vor, dass der Kondensator-Zwischenspeicher als Doppelschicht-Kondensator ausgeführt ist. Derartige Hochleistungs-Kondensatoren (sog. "Boost-Caps") weisen eine sehr hohe Speicherdichte auf, wodurch sie für die Abdeckung von Leistungsspitzen in besonderer Weise geeignet sind.

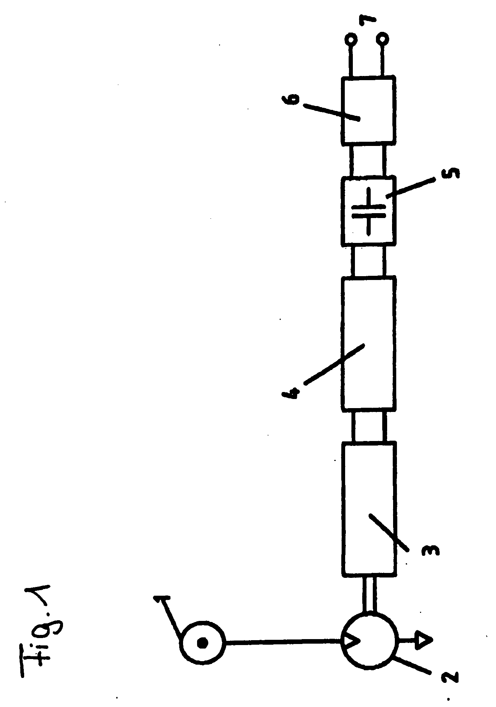

Der Erfindungsgedanke wird anhand eines Ausführungsbeispiels in nachfolgender Figur 1 visualisiert.

Eine stationäre Bremsprobeanlage zur Prüfung von Druckluftanlagen bei Schienenfahrzeugen verfügt über eine Druckluftversorgung (1), mittels der die Hauptluftleitung der zu prüfenden Schienenfahrzeuge aufgefüllt wird. Es handelt sich um eine ältere, rein mechanisch konzipierte Anlage, die durch eine funkgesteuerte Neu-Anlage zu ersetzen ist. Diese Neu-Anlage ist nach dem erfinderischen Konzept ausgeführt, welches die Nutzung der vorhandenen Druckluftversorgung (1) in besonders vorteilhafter Weise zur Erzeugung elektrischer Energie zur Speisung der elektrischen Verbraucher der Bremsprobeanlage unter Verzicht auf einen 230 V - Versorgungsanschluss vorsieht. Die erfindungsgemäße Bremsprobeanlage weist hierzu eine Druckluftturbine (2) auf, die mit dem vollen Betriebsdruck der Druckluftversorgung beaufschlagt wird. Die Rotationsenergie der Druckluftturbine wird von einem permanenterregten Gleichstromgenerator (3) in elektrische Energie umgewandelt und unter Zwischenschaltung einer Ladeelektronik (4) als Ladestrom einem Kondensator (5) zugeführt. Die Ladeelektronik steuert in an sich bekannter Weise den Ladestrom in Abhängigkeit vom Ladezustand des Kondensators (je niedriger die Kondensator-Spannung ist, desto stärker kann der zugeführte Ladestrom sein) und veranlasst - ebenfalls in Abhängigkeit vom Ladezustand des Kondensators - ein Zu- oder Abschalten der Druckluftturbine. Der Erfindungskem besteht darin, dass die Ladeelektronik dabei den Gleichstromgenerator zugleich mit einer derart bemessenen Last beaufschlagt, dass die zugeschaltete Druckluftturbine in ihrem Betriebspunkt mit bestmöglichem Wirkungsgrad arbeitet. Eine Drosselung des die Turbine durchströmenden Druckluftstromes und die damit einhergehende Wirkungsgradminderung der Druckluftturbine werden somit verhindert.
Der solchermaßen aufgeladene Kondensator gibt einen Entladestrom an die elektrischen Verbraucher der stationären Bremsprobeanlage ab. Hierbei wird die variable Ausgangsspannung am Kondensator mittels eines DC-DC-Wandlers (6) in eine konstante Betriebsspannung (7) zur Versorgung der elektrischen Verbraucher umgewandelt.

### Bezugszeichenliste:

- 1: Druckluftversorgung
- 2: Druckluftturbine
- 3: permanenterregter Gleichstromgenerator
- 4: Ladeelektronik
- 5: Kondensator
- 6: DC-DC-Wandler
- 7: konstante Ausgangsspannung

## Patentansprüche

1. Bremsprobeanlage zur Prüfung von Druckluftbremsen bei Schienenfahrzeugen, die an ein Druckluft-Versorgungsnetz (1) zur Beaufschlagung der zu prüfenden Bremsen mit Druckluft angeschlossen ist,
**dadurch gekennzeichnet,**
**dass** die Bremsprobeanlage einen vom Luftstrom des Druckluft-Versorgungsnetzes angetriebenen drehzahlungeregelten Generatorsatz, bestehend aus einer Turbine oder einem Motor (2) sowie einem Gleichstromgenerator (3), sowie einen Kondensator-Zwischenspeicher (5) umfasst, wobei der Generatorsatz unter Zwischenschaltung einer den Motor oder die Turbine in Abhängigkeit vom Ladezustand des Kondensator-Zwischenspeichers zu- oder abschaltenden sowie den Gleichstromgenerator mit einer konstanten Last beaufschlagenden Steuerungsvorrichtung (4) zur Erzeugung eines intermittierenden Ladestroms für den Kondensator-Zwischenspeicher sowie der Kondensator-Zwischenspeicher zur Abgabe eines Entladestroms an der Bremsprobeanlage zugeordnete elektrische Verbraucher eingerichtet sind.

2. Bremsprobeanlage zur Prüfung von Druckluftbremsen bei Schienenfahrzeugen nach Anspruch 1, **dadurch gekennzeichnet, dass** der Kondensator-Zwischenspeicher als Doppelschicht-Kondensator ausgeführt ist.

## Claims

1. A brake testing apparatus for testing compressed-air brakes on rail vehicles, which is connected to a compressed-air supply system (1) for supplying the brakes to be tested with compressed air,
**characterized in that**
the brake testing apparatus comprises a non-speed controlled generator set driven by the air flow of the compressed-air supply system, consisting of a turbine or a motor (2) as well as a direct current generator (3), as well as a capacitor intermediate store (5), wherein the generator set, subject to the intermediate connection of a control device (4) switching the motor or the turbine on or off as a function of the charging condition of the capacitor intermediate store and loading the direct current generator with a constant load, is equipped for generating an intermittent charging current for the capacitor intermediate store and the capacitor intermediate store is equipped for emitting a discharge current to electrical consumers assigned to the brake testing system.

2. The brake testing system for testing compressed-air brakes on rail vehicles according to Claim 1, **characterized in that** the capacitor intermediate store is designed as double-layer capacitor.

## Revendications

1. Installation d'essai de freins pour le contrôle de freins à air comprimé de véhicules ferroviaires, qui est raccordée à un réseau d'alimentation en air comprimé (1) permettant de solliciter les freins à contrôler à l'air comprimé,
**caractérisé en ce que**
l'installation d'essai de freins comprend un bloc générateur à vitesse de rotation régulée entraîné par le courant d'air du réseau d'alimentation en air comprimé et composé d'une turbine ou d'un moteur (2), d'un générateur de courant continu (3) ainsi que d'un accumulateur provisoire de condensateur (5), le bloc générateur, sous interposition d'un dispositif de commande (4) activant ou désactivant le moteur ou la turbine en fonction de l'état de charge de l'accumulateur provisoire de condensateur et sollicitant le générateur de courant continu avec une charge constante, étant conçu pour générer un courant de charge intermittent pour l'accumulateur provisoire de condensateur et l'accumulateur provisoire de condensateur pour émettre un courant de décharge vers les consommateurs électriques associés à l'installation d'essai de freins.

2. Installation d'essai de freins pour le contrôle de freins à air comprimé de véhicules ferroviaires selon la revendication 1, **caractérisée en ce que** l'accumulateur provisoire de condensateur est réalisé sous forme d'un condensateur à double couche.
